# EUROPEAN PATENT APPLICATION

(11) **EP 4 822 222 A1**
(43) Date of publication of application: **14.10.2026**
(21) Application number: 25169850.2
(22) Date of filing: 10.04.2025
(51) Int. Cl.: F16K 3/18, F16K 49/00, F16K 51/02

(54) **VACUUM VALVE COMPRISING A HEATED CLOSURE MEMBER**

(71) Applicant: VAT Holding AG, 9469 Haag (CH)
(72) Inventor: Züst, Gian-Luca, 8887 Mels (CH)
(74) Representative: Torggler & Hofmann Patentanwälte - Rankweil

(57) **Abstract**

Vacuum valve comprising a closure member arranged to close an opening, an actuator configured to move the closure member along a first path from a lowered position to an intermediate position, a closing element configured to move the closure member along a second path transversal to the first path from the intermediate position to a closed position in which the closure member closes the opening, said closure member relatively moving with respect to the first actuator when moved in the closed position, a heating element arranged at least in part on and/or in the closure member, characterized in that said vacuum valve further comprises a bellows connecting the closure member to the actuator, wherein the bellows defines a feedthrough passage through which the heating element and/or an electric cable connected to the heating element is routed from the closure member towards the first actuator.

## Description

### TECHNICAL FIELD

The present invention relates to a vacuum valve, in particular a vacuum valve for the semiconductor industry, comprising a movable closure member which in use is heated up to enhance the process performance.

### STATE OF THE ART

Valves used in certain applications, e.g. in the semiconductor industry, can be equipped with heating elements, e.g. thermal wires, heated cartridges, etc., which are used to maintain the valve components at optimal operating temperatures, especially in environments where temperature fluctuations may impact on the valve or process performance. These kinds of valves comprise a closure member which is usually actuated to open and close an opening, e.g. a flow passage of a process chamber, and a heating element which is mounted on the closure member that in use heats up the closure member. In this way, it is possible to keep under a controlled temperature the area wherein the flow passage is located through the heating provided by the closure member. In these kinds of valves, the power supply for the heating element typically runs through one or more electric cables that pass through the valve body and reach the closure member on which the heating element is mounted. However, these solutions have several drawbacks. For example, in the valves designed so that the closure member is relatively movable with respect to the valve actuator, e.g. L-motion or T-motion valves, the electric cables are subjected to continuous mechanical stresses since the closure member, while moving, exerts a force on such cables. Improper routing could lead to friction, wear, or mechanical interference, potentially damaging the cable or causing inconsistent heating. Therefore, it is a need to rout the heating element and the electric cable through the valve assembly without interfering with the motion of the closure member, ensuring that the electric cable remains protected and functions effectively without compromising the system's performance.

### SCOPES AND SUMMARY OF THE INVENTION

The present invention has the aim of solving at least in part the above-mentioned needs, wherein such scope is achieved by means of a vacuum valve according to claim 1.

The present invention describes a vacuum valve configured to maintain the valve components at optimal operating temperatures, especially in environments where temperature fluctuations may negatively impact the valve or process performance. In order to achieve this scope, such a vacuum valve comprises a closure member arranged to close an opening. For example, the closure member is an elongated plate-shaped element like those used in L-motion or T-motion valves in the semiconductor industry to close a flow passage of a process chamber. Moreover, the vacuum valve comprises an actuator, e.g. a pneumatic cylinder, configured to move the closure member along a first path from a lowered position to an intermediate position. For example, the lowered position corresponds to the opening position, or in other words the maximum opened position, of the vacuum valve. Therefore, in order to close an opening, the vacuum valve of the present invention further comprises a closing element configured to move the closure member along a second path transversal to the first path from the intermediate position to a closed position in which the closure member closes the opening. The closing element can be a second actuator or any other means to drive the closure member along the second path. For example, the closing element can be an inclined surface or any other passive means, which directs the closure member along the second path by using the force provided by the actuator, which moves the closure member along the first path. Nevertheless, in preferred embodiments of the invention the actuator configured to move the closure member along the first path is a first actuator of the vacuum valve and the closing element configured to move the closure member along the second path is a second actuator of the vacuum valve. For example, the closing element can be a pneumatic cylinder which is configured to actuate the movement of the closure member to close the opening. Based on this design configuration, the closure member relatively moves with respect to the actuator when moved in the closed position. The vacuum valve further comprises a heating element, e.g. a thermal wire, a heated cartridge, etc., arranged at least in part on and/or in the closure member so as to minimize in use the temperature fluctuations that could negatively affect the process performance. According to the invention, to rout the heating element and the electrical cable through the valve assembly without interfering with the motion of the closure member, and to ensure that the electric cable remains protected and functions effectively without compromising the system's performance, the vacuum valve comprises a bellows which connects the closure member to the valve actuator. In this way, the bellows define a feedthrough passage through which the heating element and/or the electric cable connected to the heating element is routed from the closure member towards the first actuator, remaining protected from the contact and the interference with the other moving components of the vacuum valve.

Vacuum valves are used in vacuum technology. In vacuum technology vacuum valves have to be suitable to seal pressure differences of 0,001 Millibar and/or 0,1 Pascal or more. Nevertheless, vacuum valves according to the invention could be used in other fields of application, as well. Therefore, vacuum valves according to the invention could simply be called valves, as well.

### BRIEF DESCRIPTION OF THE FIGURES

The construction and functional characteristics of the vacuum valve can be better understood from the detailed description that follows, in which reference is made to the attached figures which represent a preferred and non-limiting embodiment, wherein:
- Fig.1 shows an axonometric view of the vacuum valve according to a preferred embodiment of the present invention
- Fig.2 shows a cross-sectional view of the vacuum valve of Fig.1
- Fig.3 shows a detailed cross-sectional view of the vacuum valve of Fig.2
- Fig.4 shows a view of the closure member of the vacuum valve of Fig.1
- Fig.5a-5b show a cross-sectional view of the closure member in an intermediate and in a closed position
- Fig.6 shows a cross-sectional view of the vacuum valve of Fig.1 highlighting the routing of the heating element and the electric cable from the closure member to the valve actuator
- Fig.7a-7b show a detailed view of a plug and socket connection to mechanically and electrically connecting in a releasable manner the closure member to the valve actuator.

### DETAILED DESCRIPTION OF THE INVENTION

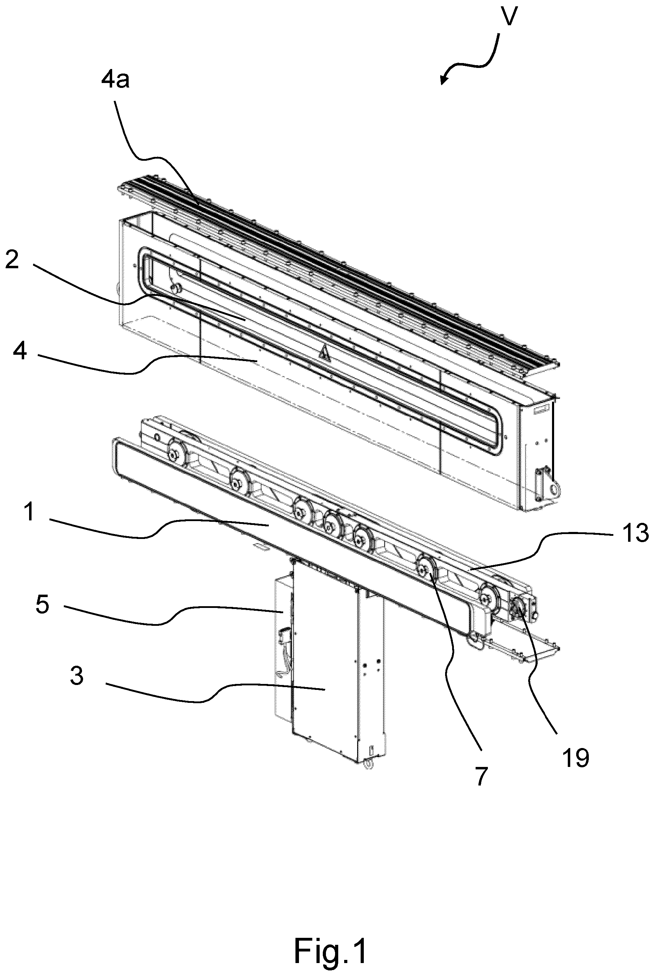

According to a preferred embodiment of the present invention, Fig.1 shows an axonometric view of a vacuum valve V comprising a closure member 1 arranged to close an opening 2, e.g. a passage opening of a semiconductor substrate to be processed in a chamber. Moreover, the vacuum valve V comprises a valve body 3 to which the closure member 1 is connected. Preferably, as shown in Fig.1, the vacuum valve V comprises a housing 4 connected to the valve body 3 so as to define an interior volume wherein the closure member 1 is arranged. Also, as shown in Fig.1, the opening 2 can be arranged on the housing 4. Advantageously, the housing 4 is used for maintenance purposes and for replacing individual components of the vacuum valve V through the removal of a lid 4a. In normal operation, the housing 4 is removably fixed to the valve body 3 and fastened to it so that the closure member 1 is easily accessible once the housing is removed. The valve body 3 can be arranged in a manner known per se on process chambers in such a way that the inlet and/or outlet openings of the process chambers communicate with the opening 2 so that the respective inlet and / or outlet openings of the process chamber can be closed and opened by means of the closure member 1.

As shown in Fig.1-2, the vacuum valve V further comprises an actuator 5 configured to move the closure member 1 along a first path X1, preferably along a longitudinal direction, from a lowered position to an intermediate position. Preferably, the lowered position of the closure member 1 corresponds to an open position of the vacuum valve V, while the intermediate position corresponds to a position of the closure member 1 in which it is moved closer to the opening 2 with respect to the lowered position, but still without closing the opening 2. Preferably, the closure member 1 faces the opening 2 when it is moved in the intermediate position.

Preferably, in order to move the closure member 1 from the lowered position to the intermediate position, the actuator 5 comprises a rod 6 which the closure member 1 is connected to. For example, the rod 6 is arranged at least in part inside the valve body 3. According to a preferred embodiment of the present invention, the actuator 5 can be a pneumatic cylinder which the rod 6 is rigidly connected to.

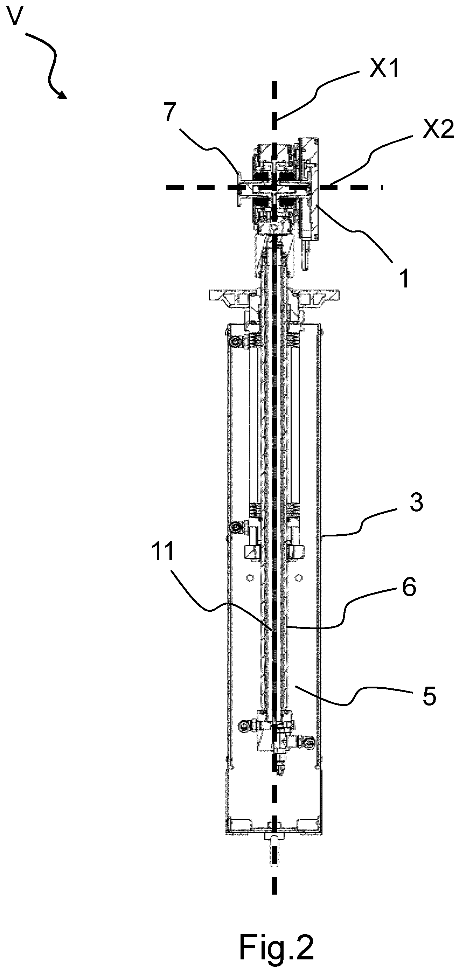

As shown in Fig.2-3, the vacuum valve V further comprises a closing element 7 which is configured to move the closure member 1 along a second path X2, transversal to the first path X1, from the intermediate position to a closed position in which the closure member 1 closes the opening 2. Preferably, the closure member 1 can be moved along a longitudinal direction which is perpendicular to the direction of motion of the rod 6 so as to cause for example the L-motion of the closure member 1.

According to an aspect of the present invention, the closure member 1 is relatively movable with respect to the actuator 5 when it is moved in the closed position, e.g. from the intermediate position, meaning that the actuator 5 does not move while the closure member 1 is moved by the closing element 7 towards the opening 2.

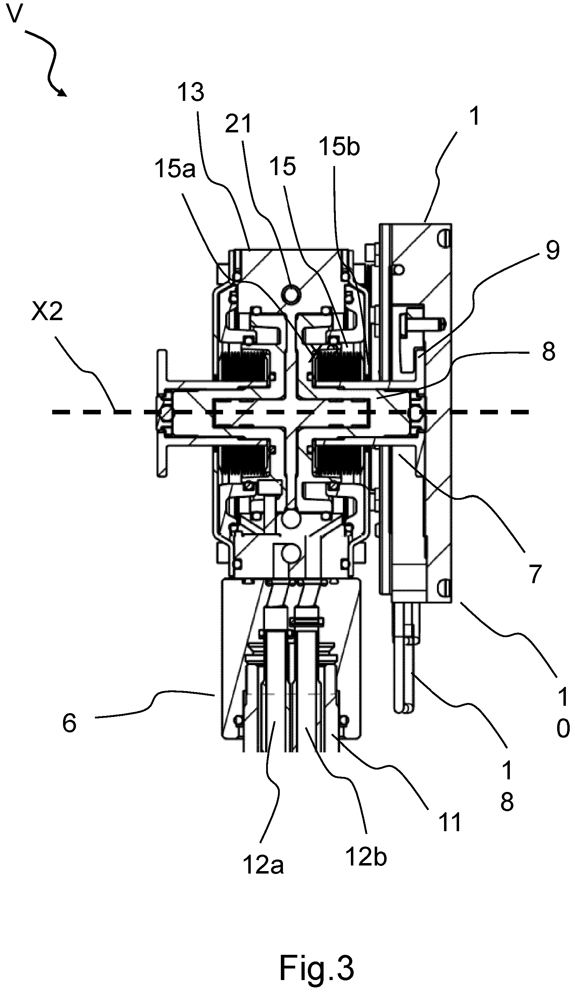

As shown in Fig.1-3, the closing element 7 can be a pneumatic actuator which can be fixed to an end portion of the rod 6. As shown in a more detailed view in Fig.3, such a pneumatic actuator comprises a piston 8 that has an end portion 9 to which the closure member 1 is rigidly connected, e.g. screwed. In this way, the closure member 1 can be moved from the intermediate position to the closed position by the piston 8 along the longitudinal direction X2, causing the relative movement of the closure member 1 with respect to the actuator 5. Therefore, when the closure member 1 is moved in the closed position, it exerts a closing force on a valve seat (not shown) around the opening. Also, a sealing 10 is arranged between the valve seat and the closure member 1. Alternatively, such a sealing can be mounted either on the closure member 1 or on the valve seat. When the closing element 7 is a pneumatic actuator, the rod 6 could be hollow so as to create an inside space 11 that is used to make one or more supply line 12a, 12b, e.g. conduits, passing through the hollow rod 6. For example, the supply line 12a, 12b can be an air supply line, but it could be also an electrical supply line, e.g. electric cables, in case the closing element 7 is an electrical actuator. Also, since the closure member 1 operates in a vacuum environment, the vacuum valve V comprises a bellows 15 which has a first end 15a connected to the pneumatic cylinder 7 and a second end 15b, opposite to the first end, which is connected to the closure member 1 so as to isolate in use the pressurized volume of the pneumatic cylinder 7 from the vacuum environment. It has to be noted that this design configuration can be used without limitations both in L-motion valves but also in T-motion valves.

According to a further embodiment non shown in the figures, the closing element 7 can be also a links mechanism wherein one o more links are pivotally connected to the hollow rod 6 so that when the actuator 5 reaches the intermediate position, the links mechanism is actuated in a manner known per se for those skilled in the art so as to cause the movement of the closure member 1 towards the opening 2.

Preferably, the closure member 1 can be an elongated plate-shaped element which is mounted in a transversal direction with respect to the direction of motion X1 of the actuator 5. Moreover, a plurality of closing elements 7 can be used to move the closure member 1 from the intermediate position to the closed position. According to this design configuration, the vacuum valve V can further comprise an elongated hollow support 13, preferably disposed transversally with respect to the direction of movement of the actuator 5, to which the plurality of closing elements 7 are connected. In particular, such an elongated hollow support 13 is rigidly connected to the rod 6 defining a feedthrough passage (not shown in the figures) that is used to connect the supply line 12a, 12b to the closing element 7.

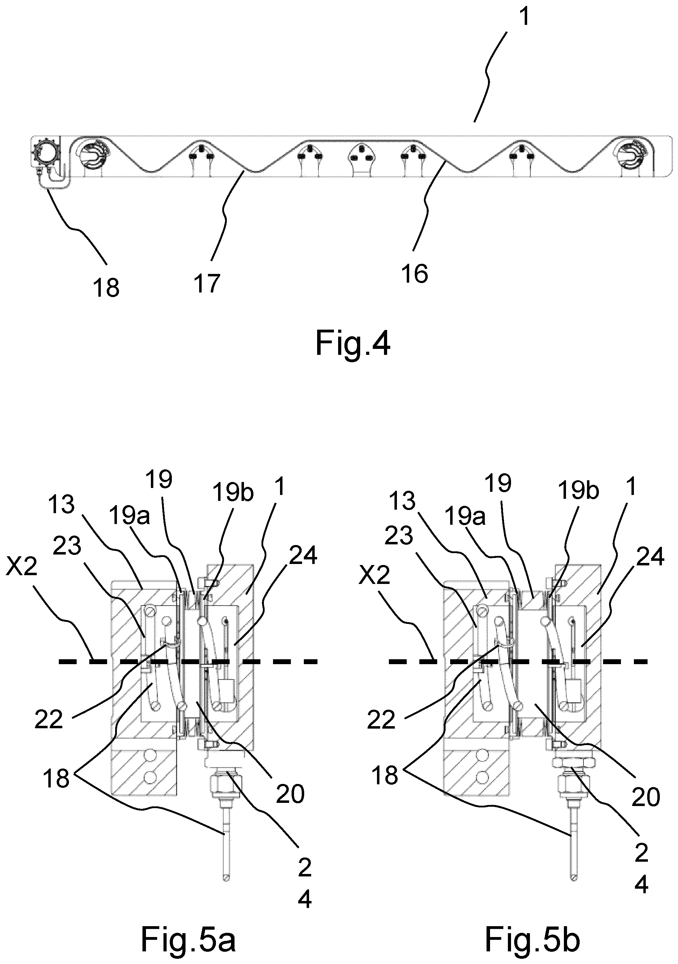

As shown in more details in Fig.4, in order to maintain the closure member 1 at optimal operating temperatures and to enhance the process performance, the vacuum valve V comprises a heating element 16, e.g. a thermal wire, a heating cartridge, etc., which is arranged at least in part on and/or in the closure member 1. For example, the closure member 1 comprises an elongated groove 17 in which the heating element 16 is at least in part disposed, but other solutions might be adopted like for example an internal conduct in the closure member 1 in which the heating element 16 passes through. Preferably, the elongated groove 17 is located on an opposite side of the closure member 1 facing away from the opening 2 at least in the closed position. Furthermore, an electric cable 18 connected to the heating element 16 passes through the valve body 3 and extends outside the valve body 3 in order to be connected to a power supply source.

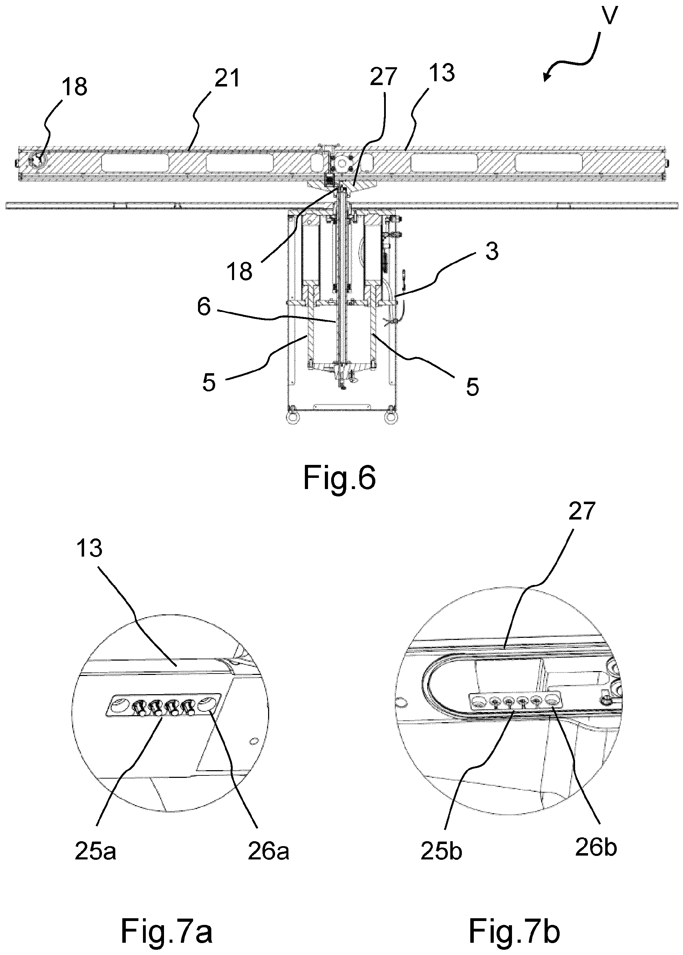

According to the invention, in order to rout the heating element 16 and the electric cable 18 through the valve body 3 without interfering with the motion of the closure member 1 and ensuring that the electric cable remains protected from damages during the motion of the closure member 1, the vacuum valve comprises a bellows 19 which is mounted so as to connect the closure member 1 to the actuator 5. In particular, as shown in Fig.5a-5b, the bellows 19 has a first longitudinal end 19a removably fixed to the hollow support 13 and a second longitudinal end opposite to the first longitudinal end 19b which is removably fixed to the closure member 1, e.g. with screws. The bellows 19 defines a feedthrough passage 20 through which the heating element 16 and/or the electric cable 18 are routed from the closure member 1 towards the actuator 5. In particular, the elongated hollow support 13 comprises an internal conduct 21 (Fig.3, Fig.6) which is in communication with the feedthrough passage 20 and with the internal space 11 of the hollow rod 6, so that it is possible to route the heating element 16 and/or the electric cable 18 from the closure member 1 outside the valve body 3 without interfering or entering into contact with other movable components of the vacuum valve V, e.g. the closure member 1 and/or the pneumatic actuator 7. Therefore, as shown in Fig.5a-5b, the bellows 19 can extend or compress on the basis of the movement of the closure member 1. Also, in order to minimize the mechanical stresses that the electric cable 18 is subjected to when the closure member 1 for example moves towards the opening 2, e.g. a tension generated by a pulling force, such an electric cable has a portion which has a coil configuration, e.g. like a coil spring. Preferably, such a coil configuration is arranged inside the bellows 19. Also, in order to minimize any unwanted movement of the electric cable 18 between the elongated hollow support 13 and the closure member 1, the vacuum valve V can comprise a plurality of radial protrusions 22 to which a portion of the electric cable can be fixed to. Alternatively, the radial protrusions 22 can be arranged either inside a recessed portion 23 on the closure member 1 which receives one of the end portions of the bellows 19, or inside another recessed portion 24 on the elongated hollow support 13 which receives the other end portion of the bellows 19. More preferably, the radial protrusions can also be arranged on the end portions of the bellows 19. It has to be noted that the portion of the electric cable that runs from the hollow rod 6 till the recessed portion 23 of the closure member 1 is at the environmental pressure. Preferably, the electric cable 18 can be routed outside the recessed portion 23 of the closure member 1, for example when the closure member 1 is designed so that it comprises the elongated groove 17 and the heating element 16 has to be mounted inside such an elongated groove. Therefore, since the closure member 1 operates in a vacuum environment, the vacuum valve V comprises an isolating element 28 which is interposed between the portion of the electric cable 18 disposed on the environmental pressure side, and the portion of the electric cable disposed on the vacuum side. Alternatively, the electric cable 18 can be routed from the recessed portion 23 of the closure member 1 into an internal channel (not shown in the figures) of the closure member 1 and in this case the isolating element 28 is not necessary as the electric cable 18 and the heating element 16 are not exposed to the vacuum environment.

According to a further aspect of the present invention, the closure member 1 can be connected to the actuator 5 in a releasable manner, for example through a plug and socket connection, so that it is possible to perform an easier maintenance on the vacuum valve V in case of any malfunction or damages to the closure member 1 and/or to the heating element 16. As shown in Fig.7a-7b, the plug and socket connection can be realized so that the closure member 1 is connected to the actuator 5 mechanically and the heating element 16 electrically. In order to do so, the elongated hollow support 13 has a portion wherein with a series of electrical pins 25a that can be connected to a corresponding series of electrical socket 25 arranged on a yoke 27 rigidly connected to the hollow rod 6. The mechanical connection instead can be performed in a manner known for those skilled in the art, e.g. by means of screws connecting the elongated hollow support 13 and the yoke 27 in respective holes 26a, 26b. Alternatively, the electrical pins 25a can be located on the yoke 27 and the electrical socket on the elongated hollow support 13.

It has to be noted that also that that for maintenance reasons, e.g. in case of replacement of the closure member 1 and/or of the heating element 16, it could be provided a closure unit as a replacement kit for a vacuum valve V which comprises the closure member 1 to close the opening 2, the heating element 16 arranged at least in part on and/or in the closure member 1, the bellows 19 configured to connect the closure member 1 to the actuator 5, wherein the bellows 19 define in use the feedthrough passage 20 through which the heating element 16 and/or an electric cable 18 connected to the heating element is routed from the closure member towards the first actuator. For example, the replacement can be done through the plug and socket connection, e.g. by unscrewing and disconnecting the electric pins from the electric socket, and then mounting a new closure unit on the valve.

## Claims

1. Vacuum valve (V) comprising:
- a closure member (1) arranged to close an opening (2),
- an actuator (5) configured to move the closure member (1) along a first path (X1) from a lowered position to an intermediate position,
- a closing element (7) configured to move the closure member along a second path (X2) transversal to the first path (X1) from the intermediate position to a closed position in which the closure member (1) closes the opening (2), said closure member relatively moving with respect to the actuator when moved in the closed position,
- a heating element (16) arranged at least in part on and/or in the closure member (1),
**characterized in that**
said vacuum valve further comprises a bellows (19) connecting the closure member (1) to the actuator (5), wherein the bellows (19) defines a feedthrough passage (20) through which the heating element (16) and/or an electric cable (18) connected to the heating element is routed from the closure member towards the actuator (5).

2. Vacuum valve (V) according to claim 1, wherein the closure member (1) is a plate-shaped element and/or wherein the closure member (1) comprises an elongated groove (17) in which the heating element (16) is at least in part disposed.

3. Vacuum valve (V) according to claim 2, wherein the elongated groove (17) is located on an opposite side of the closure member (1) facing away from the opening (2) at least in the closed position.

4. Vacuum valve (V) according to any of the preceding claims, wherein the actuator (5) is a pneumatic actuator.

5. Vacuum valve (V) according to any of the preceding claims, wherein the actuator (5) configured to move the closure member (1) along the first path (X1) is a first actuator of the vacuum valve (V) and the closing element (7) configured to move the closure member (1) along the second path (X2) is a second actuator of the vacuum valve (V), preferably wherein the closing element (7) is a pneumatic actuator.

6. Vacuum valve (V) according to any of the preceding claims, wherein the actuator (5) comprises a hollow rod with an inside space (11), wherein the heating element (16) and/or the electric cable (18) connected to the heating element is or are disposed in the inside space at least in part.

7. Vacuum valve (V) according to claim 6, comprising a supply line (12a, 12b) disposed in the inside space (11) of the hollow rod (6) which is connected to the closing element (7).

8. Vacuum valve (V) according to claims 6 or 7, wherein the actuator (5) further comprises an elongated hollow support (13), the elongated hollow support being connected to the bellows (19) so as to define the feedthrough passage (21).

9. Vacuum valve (V) according to claim 8, wherein the closing element (7) is mounted on the elongated hollow support (13).

10. Vacuum valve (V) according to any of the preceding claims, wherein the closure member (1) is connected to the actuator (5) in a releasable manner, preferably through a plug and socket connection (25a, 25b, 26a, 26b).

11. Vacuum valve (V) according to claim 10, wherein the plug and socket connection (25a, 25b, 26a, 26b) connects the closure member (1) to the actuator (5) mechanically and the heating element electrically.

12. Vacuum valve (V) according to any of the preceding claims, further comprising radial protrusions (22) arranged in a recessed portion (23, 24) of the closure member (1) and/or of the elongated hollow support (13) the receives the heating element (16) and/or the electrical cable (18), and said heating element and/or the electrical cable having a portion fixed to such protrusions.

13. Vacuum valve according to any of the preceding claims, wherein the heating element is a wire heater.

14. Closure unit for a vacuum valve (V) according to any of the claims 1 to 13, comprising:
- A closure member (1) to close an opening (2),
- A heating element (16) arranged at least in part on and/or in the closure member (1),
- A bellows (19) configured to connect the closure member (1) to the actuator (5), wherein the bellows (19) define in use a feedthrough passage (20) through which the heating element (16) and/or an electric cable (18) connected to the heating element is routed from the closure member towards the first actuator.
